# EUROPEAN PATENT SPECIFICATION

(11) **EP 3 674 935 B1**
(45) Date of publication and mention of the grant of the patent: **26.08.2026**
(21) Application number: 18306861.8
(22) Date of filing: 27.12.2018
(51) Int. Cl.: G06F 21/31, H04M 3/51, G06F 21/32, H04L 67/08, H04L 67/50, H04L 67/1004

(54) **SYSTEM FOR PROVIDING IT SERVICES SUPPORT TO END-USERS/CUSTOMERS**
SYSTEM ZUR BEREITSTELLUNG VON IT-DIENSTLEISTUNGSUNTERSTÜTZUNG FÜR ENDBENUTZER/-KUNDEN
SYSTÈME DE FOURNITURE DE PRISE EN CHARGE DE SERVICES INFORMATIQUES AUX UTILISATEURS/CLIENTS FINAUX

(43) Date of publication of application: 01.07.2020
(73) Proprietor: ATOS FRANCE, 95870 Bezons (FR)
(72) Inventor: PONCE, Javier, Brooklyn NY 11211 (US)
(74) Representative: Novagraaf Technologies

(56) References cited:
- US-A1- 2013 137 397
- US-A1- 2014 161 241
- US-A1- 2015 036 813
- US-A1- 2016 373 581

## Description

### FIELD OF INVENTION

The present invention relates to the field of help service desk and more precisely to a system for providing IT service desk to end-user requiring a support.

### BACKGROUND OF THE INVENTION

IT Service Desk or Help Desk service are well known as the single point of contact in most organizations, for support regarding IT related requests and issues. It has recently become a first point of contact for selected non-IT related issues too, which makes it an extremely important element for most businesses, without which, they would cease to function or become hugely unproductive.

The massive adoption of smartphones and tablets is changing the way we consume data. We live in a mobile first world now, where everything can be done on a smartphone or tablet. End User support is no different, so having convenient data from anywhere and at any time and being able to request whatever is needed to run an activity in a secure way is what makes the difference.

US2014/161241A1 discloses a system and method for matching call and data in a contact center platform, to which a mobile application is connected in order to initiate calls or chats. US2016/373581A1 discloses dynamically allocating a temporary telephone number to link an authenticated online session with a corresponding call to a call center. US2013/137397A1 relates to a method for providing a voicemail password reset feature. US2015/036813A1 discloses systems and methods for initiating a pre-authorized phone call.

### SUMMARY OF THE INVENTION

The present invention has as its object to obviate certain drawback of the prior art by proposing an infrastructure for providing services support in an efficient and secure way to end-user/customer. The invention is set out in the appended claims.

This goal is achieved by a system (1) for providing IT services support to end-users/customers comprising at least:
a service platform (2) comprising a central database and including at least a contact platform, at least a service management platform (20), each platform comprising at least a server, at least a database for storing data or information and/or a set of programs executed on the servers for at least providing services;
a communication network for at least connecting components of the service platform;
a self-service mobile application for accessing IT services support provided by IT services providers through the service platform (2)and running on a mobile device (4) comprising at least a memory for storing said application and/or a set of programs, a screen for displaying or receiving information/instructions, a processor for executing said application so as to implement a set of functionalities allowing end-users, owners of said mobile device (4), through a set of icons and fields of an interactive interface generated by the execution of the application for getting support from agents on the contact platform (21) through a multi-channel of communication;
the system (1) being characterized in that the set of functionalities of the application comprises a functionality allowing an automated two-factor authentication for resetting password via an active directory and, connects to the contact platform (21) for allowing end-users to access the IT services support and to a services management platform for downloading instructions and or information for at least monitoring the end-users' requests addressed to the IT services providers of the services platform.

According to another feature, the system comprises a firmware or a hardware with software which implements a set of functionalities of the self-service mobile application which comprises at least:
proactive newsfeed;
starting a phone call or a live chat with a support agent of the service platform;
requesting a call-back by a support agent;
accessing a virtual agent;
check the status of a support ticket
order IT services and products from a service catalogue.

According to another feature, the central database of the service platform (2) comprises at least a set of layers each layer comprising at least a storage for registering at least specific data and/or information related at least to the user or customer, the set of layers comprising at least:
a contact layer for registering information such as contact ID (contact identity), phone Number (phone number), customer ID (customer identity), and contact properties;
a customers layer for registering information such as customer properties (Name, ...), display properties (colors, logo, ...), connection properties (phone numbers, service names, ...);
a domain layer for registering information such as a domain ID, the customer ID and connection properties (LDAP paths, ...);
a user layer for registering information such as User ID, contact ID, customer ID, domain ID, user properties (login name, ...).

According to another feature, the service management platform (20) comprises an application management cluster (200) including at least two servers (or nodes) for the self-service mobile application management (OCMI server hardware) comprising at least an interface for managing end-user provisioning, authentication and, at least a storage for storing service definitions which are used and selected by the user from the self-service mobile application communication towards the respective contact platform (21) service components (Genesys).

According to another feature, the service platform (2) comprises an orchestration cluster (210) for managing the incoming request, transmitted by an end-user through the self-service mobile application, and/or transmitting said request to the contact platform.

According to another feature, the communication network comprises at least an internal load-balancer (220) device comprising at least a set of memorized addresses for distributing load between the servers of the service management platform (20) and the contact platform.

According to another feature, it comprises a transmission platform (3) comprising at least a server for enabling communication between the self-service mobile application and the service management platform (20) and/or the contact platform.

According to another feature, the transmission platform (3) comprises at least a transmission load-balancer (300), comprising at least a set of memorized addresses, for transmitting communication from the self-service mobile application, through the internal load-balancer (220) of the communication network, to the service management platform (20) and/or the contact platform.

According to another feature, the system (1) comprises a SMTP server connected to the service management platform (20) for sending to customers at least initial onboarding password for allowing communication between the self-service mobile application and the service management platform (20) and/or the contact platform.

According to another feature, the contact platform (21) comprises at least a webservice call module comprising a set of programs for at least checking end-user/customer phone-number, checking updates, getting data updates when an end-user/customer requests a support from the service platform.

According to another feature, when a communication is taking place from the self-service mobile application towards the service management platform (20) , the transmission load-balancer (300) selects, by means of a program executed on its processor, the corresponding memorized address and transmits the information to the internal load-balancer (220)of communication network, which in return selects, by means of a program executed on a its processor, a corresponding address to transmit the information to the component of the management platform concerned by the information transmitted.

According to another feature, when a communication is taking place from the self-service mobile application towards the contact platform, the transmission load-balancer (300) selects, by means of a program executed on a its processor, the corresponding memorized address and transmits the information to the internal load-balancer (220)of communication network, which in return selects, by means of a program executed on a its processor, a corresponding address to transmit the information to the component of the contact platform (21) concerned by the information transmitted.

According to another feature, the contact platform (21) comprises a set of memorized service modules or program, the execution of which on at least a processor of one of the servers of said contact platform, implement at least one of the services selected by the user according the memorised service definitions and comprising at least a click-to-call service, a callback service, a chat service and an e-mail service, when the request of one of said services is sent by the self-service mobile application of a user to the contact platform.

The present invention also has as its object to obviate certain drawback of the prior art by proposing a method for configuring self-service mobile application as described above and a user mobile device (4) for allowing him to access support in an efficient and secure way.

This goal is achieved by a set-up procedure for configuring an end-user mobile device (4) on which is installed a self-service mobile application for accessing IT services support as described above, said mobile application comprising at least a set-up program, the execution of which on an end-user mobile device (4) implements the set-up procedure comprising at least:
Checking by means of a routine if it is the first run of the application on the device or not; and,;
   - launching an onboarding procedure, if it is the first run;
   - launching an update/synchronization procedure if not.
Checking security;
launching a feedback of data
storing data in the application
launching a start page

According to another feature, the onboarding procedure implemented by the set-up program of said self-service mobile application comprises at least:
Login
Connecting to the contact platform (21) webservice; and;
   - Launching a notification, displayed on the screen of the mobile device (4), to end-user for following a set of instructions/actions, in the case that the access to the contact platform (21) webservice is not allowed;
   - In the case the access to the contact platform (21) webservice is allowed, checking if the phone number of the end-user exists in the database of the contact platform; and
      ∘ Notifying the end-user for following up a set of instructions/actions in the case the phone number does not exists in the contact platform (21) database;
      ∘ Getting the end-user configuration if the phone number exists in the contact platform (21) database;
      ∘ Returning end-user configuration;
      ∘ storing the configuration settings on the mobile.

According to another feature, the onboarding procedure implemented by the set-up program of said self-service mobile application comprises at least:
- Login
- Check if the phone number and the e-mail entered during the login are registered in the database of the contact platform; and
   - Notifying the user if the phone number and e-mail are not registered and set at least a set of instructions/actions to do;
   - if the phone number and e-mail are registered, check if the application is authenticated; and
      - if the application is not authenticated
         - check if the end-user has an activation code and if not;
            ∘ send an activation code via sms or e-mail to the end-user
            ∘ activate application after receiving the activation code;
            ∘ storing an UID on the mobile device (4) of the end-user
            ∘ check again if the application is authenticated
   - if the application is authenticated, check if it is the end-user first login; and
      - if it is the first login;
         - check for updates
         - update/synchronize data
         - store data in application
         - start application page

   - if it is not the first login
      - launch feedback data
      - store data in application
      - start application page

According to another feature, the update/synchronization procedure implemented by the set-up program of said self-service mobile application comprises at least:
- Login
- Connect to the contact platform (21) web service and;
   - Launching a notification to the end-user for following up a set of instructions/actions in the case access to the contact platform (21) is not allowed;
   - Checking if the phone number of the end-user exists in the database of the contact platform (21) in the case the access is allowed and;
      ∘ if the phone number does not exist:
         - getting empty configuration
         - returning the configuration;
         - updating configuration settings
      ∘ if the phone number exists:
         - getting user configuration;
         - returning configuration;
         - updating configuration settings

According to another feature, the system comprises a firmware or hardware with software for launching a notification to an end-user, using the self-service application to request services, for following up a set of instructions/actions in case access to the contact platform is not allowed.

According to another feature, the system comprises a firmware or hardware with software for checking if the phone number of an end-user exists in the database of the contact platform in the case the access to said contact platform is allowed and;
∘ if the phone number does not exist:
   • getting empty configuration
   • returning the configuration;
   • updating configuration settings
∘ if the phone number exists:
   • getting user configuration;
   • returning configuration;
   • updating configuration settings

According to another feature, the system comprises a firmware or hardware with software for checking if the phone number and the e-mail entered during the login are registered in the database of the contact platform and;
- Notifying the user if the phone number and e-mail are not registered and set at least a set of instructions/actions to do;
- if the phone number and e-mail are registered, check if the application is authenticated; and
   - if the application is not authenticated
      - check if the end-user has an activation code and if not;
         ∘ send an activation code via sms or e-mail to the end-user
         ∘ activate application after receiving the activation code;
         ∘ storing an UID on the mobile device (4) of the end-user
         ∘ check again if the application is authenticated
- if the application is authenticated, check if it is the end-user first login; and
   - if it is the first login;
      - check for updates
      - update/synchronize data
      - store data in application
      - start application page
- if it is not the first login
   - launch feedback data
   - store data in application
   - start application page

### BRIEF DESCRIPTION OF THE DRAWINGS

Other features and advantages of the present invention will appear more clearly upon reading the following description, given with reference to the appended drawings, in which:
- [Fig 1]: - figure 1 is a schematic representation of the system for providing support to end-users/customers through a self-service mobile application, according one embodiment;

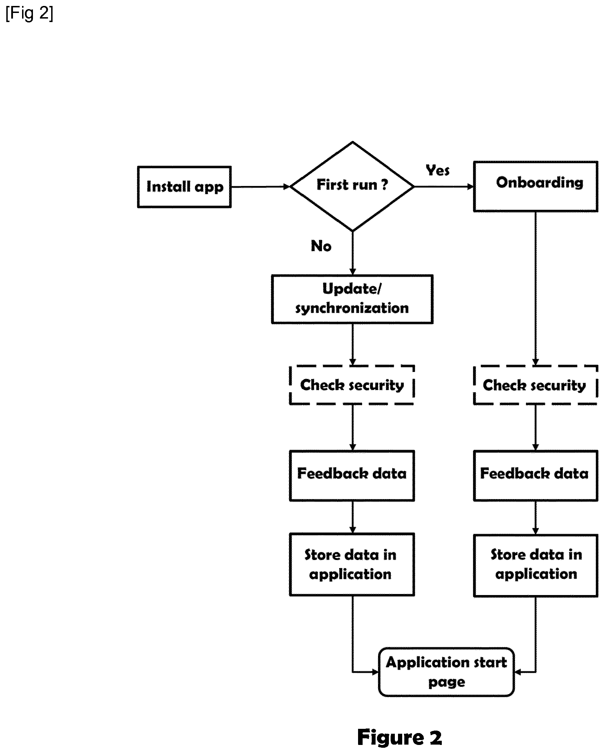

- [Fig 2]: - figure 2 is a schematic representation of the set-up procedure for configuring the use of the self-service mobile application on the end-user mobile device (4), according one embodiment;
- [Fig 3]: - figure 3 is a schematic representation of the onboarding step of the set-up procedure according one embodiment.
- [Fig 4]: - figure 4 is a schematic representation of the onboarding step of the set-up procedure according another embodiment;
- [Fig 5]: - figure 5 is a schematic representation of the update/synchronization step of the set-up procedure according one embodiment;
- [Fig 6]: - figure 6 is a display of the main page of the self-service mobile application according one embodiment;

### DETAILED DESCRIPTION

The present invention concerns a system (1) for services support to end-user/customer requiring help for IT services.

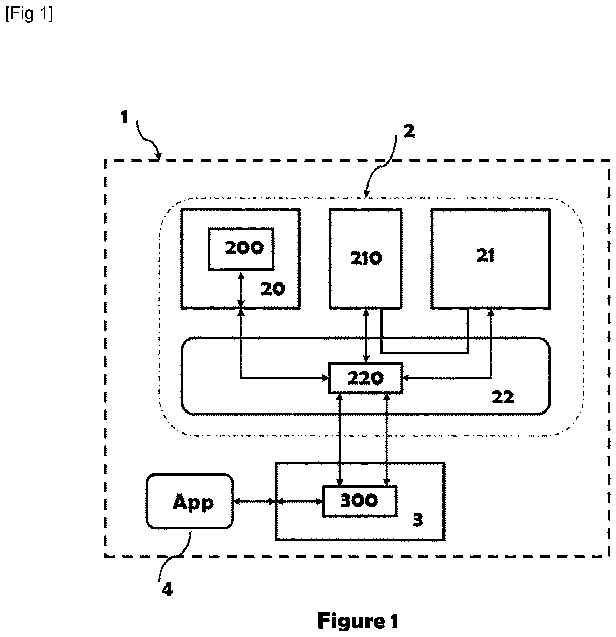

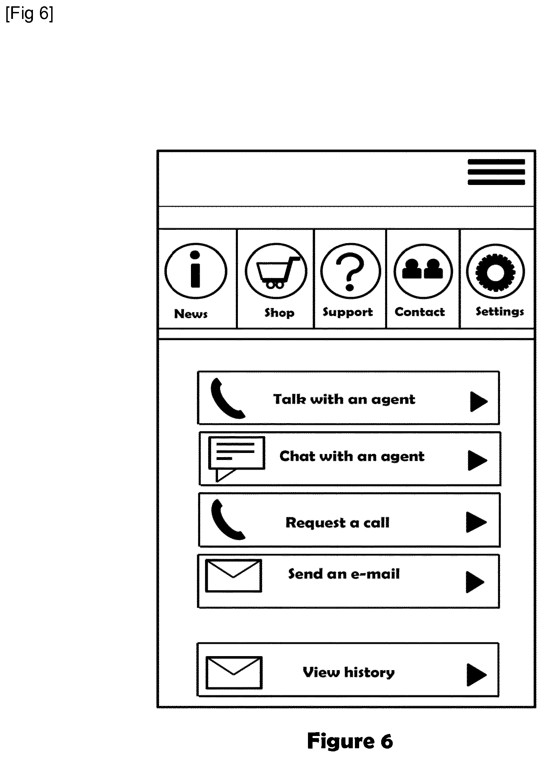

In some embodiments, the system (1) for providing IT services support to end-users/customers, as illustrated on figure 1, comprises at least:
a service platform (2) including at least a contact platform, at least a service management platform (20), each platform comprising at least a server, at least a database for storing data or information and/or a set of programs executed on the servers for at least providing services;
a communication network for at least connecting components of the service platform;
a self-service mobile application ( see figure 6 for illustration of the main page of the application) for accessing IT services support provided by IT services providers through the service platform (2) and running on a mobile device (4), for example and without limitation a smartphone or a tablet, comprising at least a memory for storing said application and/or a set of programs, a screen for displaying or receiving information/instructions, a processor for executing said application so as to implement a set of functionalities allowing end-users, owners of said mobile device (4), through a set of icons and fields of an interactive interface generated by the execution of the application for getting support from agents on the contact platform (21) through a multi-channel of communication;
the system (1) being characterized in that the set of functionalities of the application comprises a functionality allowing an automated two-factor authentication for resetting password via an active directory and, connects to the contact platform (21) for allowing end-users to access the IT services support and to a services management platform for downloading instructions and or information for at least monitoring the end-users' requests addressed to the IT services providers of the services platform.

By platform, we mean a computer infrastructure comprising at least a computer or electronic device including at least a set of programs (or routines or modules) the execution of which implement a set of well-defined functionalities.

The central database of the service platform (2) comprises at least a set of layers, each layer comprising at least a storage for registering at least specific data and/or information related at least to the user or customer, the set of layers comprising at least:
- a contact layer,
- a customers layer;
- a domain layer ;
- a user layer

In the contact layer, information such as contact ID (contact identity), phone Number (phone number), customer ID (customer identity); and contact properties are registered. The contact properties include at least the first name, the last name, the mail address, etc.

The customers layer is used to registered at least customer properties (Name, etc.), display properties (colors, logo, etc.), connection properties (phone numbers, service names, etc.)

In the domain layer, the domain ID, the customer ID and connection properties (LDAP paths, etc.) may be registered.

User ID, contact ID, customer ID, domain ID, user properties (login name, etc.) are the type of information that me be registered in the user layer.

The database may also include information on language.

In some embodiments, the system comprises a firmware or a hardware with software which implements a set of functionalities of the self-service mobile application which comprises at least:
- proactive newsfeed ;
- starting a phone call or a live chat with a support agent of the service platform;
- requesting a call-back by a support agent;
- accessing a virtual agent;
- check the status of a support ticket;
- order IT services and products from a service catalogue;

The self-service mobile application may be executed in an iOS, Android and Windows environment.

In some embodiments, the contact platform (21) may connect to the database of the service platform (2) to download information on customer/user and/or registered them in its own database (for example and without limitation Cassandra). The contact platform (21) comprises agents for interacting with an end-user/customer through the self-mobile application running on said end-user/customer mobile device (4). An agent may be an individual or an Al (Artificial intelligence) agent.

In some embodiments, the service management platform (20) (for example and without limitation ServiceNow may be used as a service management framework) comprises an application management cluster (200) cluster including at least two servers (or nodes) for the self-service mobile application management (OCMI server hardware) comprising at least an interface for managing end-user provisioning, authentication and, at least a storage for storing service definitions which are used and selected by the user from the self-service mobile application communication towards the respective contact platform (21) service components (Genesys, for example and without limitation). The cluster for the self-service mobile application management may includes a loadblancer for distributing load between the at least two servers.

In some embodiments, the service platform (2) comprises an orchestration cluster (210) for managing the incoming request, transmitted by an end-user through the self-service mobile application, and/or transmitting said request to the contact platform.

In some embodiments, the communication network comprises at least an internal load-balancer (220)device comprising at least a set of memorized addresses for distributing load between the servers of the service management platform (20) and the contact platform.

In some embodiments, the system (1) comprises a transmission platform (3) comprising at least a server for enabling communication between the self-service mobile application and the service management platform (20) and/or the contact platform.

The transmission platform (3) may comprise at least a transmission load-balancer (300), comprising at least a set of memorized addresses, for transmitting communication from the self-service mobile application, through the internal load-balancer (220) of the communication network, to the service management platform (20) and/or the contact platform.

In some embodiments, the system (1) comprises a SMTP server connected to the service management platform (20) for sending to customers at least initial onboarding password for allowing communication between the self-service mobile application and the service management platform (20) and/or the contact platform.

In some embodiments, the contact platform (21) comprises at least a webservice call module comprising a set of programs for at least checking end-user/customer phone-number, checking updates, getting data updates when an end-user/customer requests a support from the service platform.

In some embodiments, the contact platform (21) comprises a set of architectures (servers or clusters for example and without limitation) running on their processors a set of routines or programs for providing at least the following services when receiving a request from the self-service mobile application
- Click-to-call: user/customer selects a service desk topic from his drop down list clicks okay and his phone will dial the correct phone number. His phone call is matched with data in the database of the contact platform (21) (Cassandra for example and without limitation) and he will be put directly into the target queue bypassing an IVR (Interactive voice response).
- Callback: user/customer can select a date & time to receive a callback from an agent for a certain topic. At the given time, the callback is routed to an agent who will call back the customer.
- Chat: user/customer can select a topic and initiate the chat. This is the same as if the chat was initiated through a webpage.
- Email: user/customer can send an email via the mobile device (4) self-service application, this is handled the same way as with an incoming email on the actual mailbox.

The click-to-call service is configured in such a way that it is used for all customers and services, thus there is no individual configuration if a new customer or service is added.

Configuration of the Click-to-call may be done, for example, through a customized Pre-IVR routing strategy.

When a user/customer initiates a call, the mobile application will send the user/customer's phone number to the contact platform (21) and at the same time request the phone number to be dialed for this service. A record is now created in the contact platform (21) database (Cassandra for example) for, for example and without limitation, 60 seconds containing both numbers.

If the actual call from the user/customer now arrives at a SIP (Session Initiation Protocol ) Server and the routing strategy is executed, an URS (universal routing service) will first call a 'matching strategy' on the ORS (orchestration service) which checks for a match of the ANI (automatic number identification) and DNIS (dialed number identification service) for an incoming call in the contact platform (21) database (Cassandra for example). If there is a 100% match of both phone numbers, a session ID will be returned. If there is no match, regular Pre-IVR routing strategy steps will be executed.

In case of a match, a second ORS strategy is called to retrieve any key/value pair (KVPs) for the matched session ID.

For callback, a dedicated configuration is created for every routing target, e.g. every voice service. This is because the callback must include a unique target which cannot be passed via a callback API.

The contact platform (21) offers a web interface through the self-service mobile application to check on scheduled callback requests where one can also reschedule or cancel them.

In order to send the agent a 'callback wrap-up' after the callback, a Callback plugin must be installed on each WDE (workplace desktop edition) client. This wrap-up screen is used for labeling the callback as (un)successful and can provide various reason why a call was successfully -or not completed.

Agents also have the ability to reschedule the callback if a customer was not reached. A callback is than placed back into the queue and will follow the normal routing for the service.

These reasons can hereafter be reported in the currently in progress GMS Callback Report.

Agents also have the ability to reschedule the callback if a customer was not reached. A callback is than placed back into the queue and will follow the normal routing for the service.

A basic chat service of type 'request-chat' may be created within the contact platform. This is to ensure chat is only submitted to routing via an endpoint and no further handling of this interaction by ORS (orchestration services) is required. No additional configuration is necessary. Incoming contact platform (21) chats will make use of the already existing chat transaction lists for routing, after being submitted to the specified endpoint. There may be, for example and without limitation, three chat servers to which is connected a management service of the contact platform (21) for redundancy

In some embodiments, some components of the contact platform (21) are replicated and/or running in a cluster configuration (which means that we may have more than one same component working as nodes, for example and without limitation two orchestration services), in such a way that if one component goes down the next one may be used.

In some embodiments, in the self-service mobile application management service of the service management platform (20) , all data is replicated between the two nodes (servers) for redundancy. The internal load balancer ensures load distribution and fault tolerance in the event of a hardware failure on one of the nodes.

In some embodiments, when a communication is taking place from the self-service mobile application towards the service management platform (20) , the transmission load-balancer (300) selects, by means of a program executed on its processor, the corresponding memorized address and transmits the information to the internal load-balancer (220)of communication network, which in return selects, by means of a program executed on a its processor, a corresponding address to transmit the information to the component of the management platform concerned by the information transmitted.

In some embodiments, when a communication is taking place from the self-service mobile application towards the contact platform, the transmission load-balancer (300) selects, by means of a program executed on a its processor, the corresponding memorized address and transmits the information to the internal load-balancer (220)of communication network, which in return selects, by means of a program executed on a its processor, a corresponding address to transmit the information to the component of the contact platform (21) concerned by the information transmitted.

The transmission load-balancer (300) and the internal load-balancer (220)used different addresses depending if communication is established between the self-help mobile application and the service management platform (20) or between the self-help mobile application and the contact platform.

The system (1) is configured in such a way that the self-service mobile application management network environment in the service management platform (20) does not communicate with the contact platform (21) environment as that interaction takes place directly from the contact platform (21) to the self-service mobile application.

In some embodiments, the contact platform (21) comprises a set of memorized service modules or program, the execution of which on at least a processor of one of the servers of said contact platform, implement at least one of the services selected by the user according the memorised service definitions and comprising at least a click-to-call service, a callback service, a chat service and an e-mail service, when the request of one of said services is sent by the self-service mobile application of a user to the contact platform.

Another goal of the present invention concerned a method to configure the use of the self-service mobile application on the end-user device.

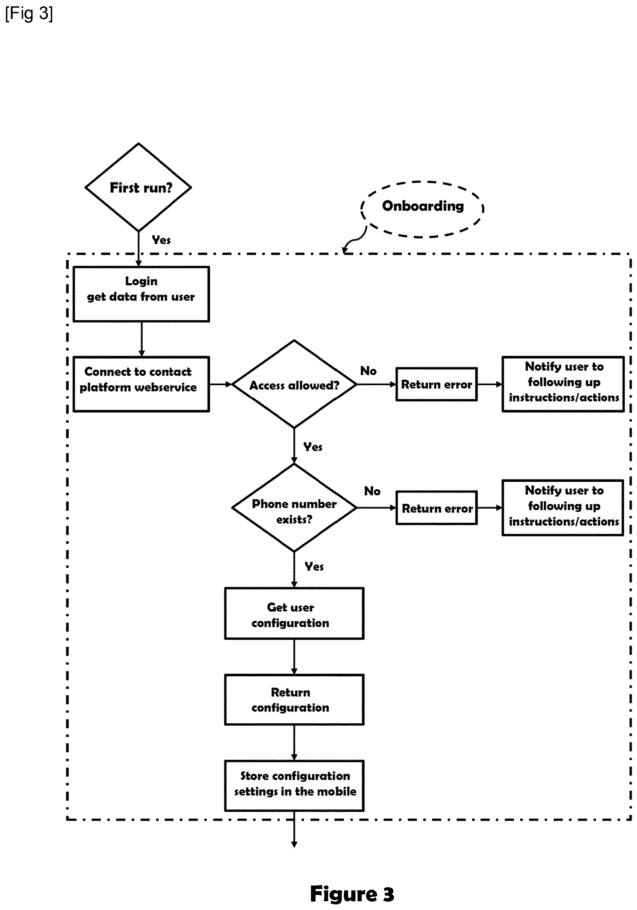

This goal is reached by set-up procedure (figure 3) for configuring an end-user mobile device (4) on which is installed a self-service mobile application for accessing IT services support as described above, said mobile application comprising at least a set-up program, the execution of which on an end-user mobile device (4) implements the set-up procedure comprising at least:
- checking by means of a routine if it is the first run of the application on the device or no; and,
   - launching an onboarding procedure, if it is the first run;
   - launching an update/synchronization procedure if not.
- launching a feedback of data;
- storing data in the application;
- launching a start page.

The set-up procedure may optionally comprise checking security. The step of checking security may include:
- enabled/disabled user ;
- attributing roles for controlling access to the functionalities of the self-help application;

The feedback data may comprise:
- customer specific links,
- user data,
- customer specific look and feel configuration;
- user options

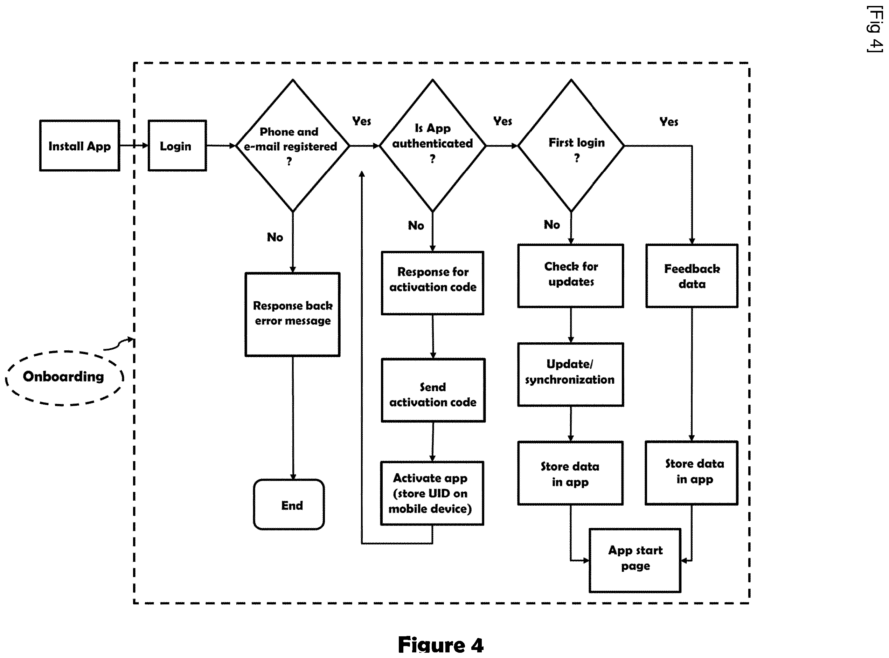

In some embodiments, the onboarding procedure (figure 4) implemented by the set-up program of said self-service mobile application comprises at least:
- login
- connecting to the contact platform (21) webservice by mean of an authentication method; and,
   - launching a notification, displayed on the screen of the mobile device (4), to end-user for following a set of instructions/actions, in the case that the access to the contact platform (21) webservice is not allowed. The notification message may be for example, and without limitation "If you think you should have access, please contact ...";
   - in the case the access to the contact platform (21) webservice is allowed, checking if the phone number of the end-user exists in the database of the contact platform; and
      ∘ notifying the end-user for following up a set of instructions/actions in the case the phone number does not exists in the contact platform (21) database;
      ∘ getting the end-user configuration if the phone number exists in the contact platform (21) database
      ∘ returning end-user configuration
      ∘ storing the configuration settings on the mobile

The information required for the login of an end-user or a customer may include at least a phone number, an e-mail address, a password, etc.

The authentication methods provided by the service platform (2) for allowing an end-user to have a support through the use of the self-help application may comprise:
- a Single Sign-On (SSO) authentication method which is a session and user authentication service that permits a user to use one set of login credentials (e.g., name and password) to access multiple applications. The service authenticates the end user for all the applications the user has been given rights to and eliminates further prompts when the user switches applications during the same session. On the back end, SSO is helpful for logging user activities as well as monitoring user accounts;
- a Draw a Secret (DAS) method which is a graphical password input scheme. The scheme replaces alphanumeric password strings, with a picture drawn on a grid. Instead of entering an alphanumeric password, this authentication method allows users to use a set of gestures drawn on a grid to authenticate.

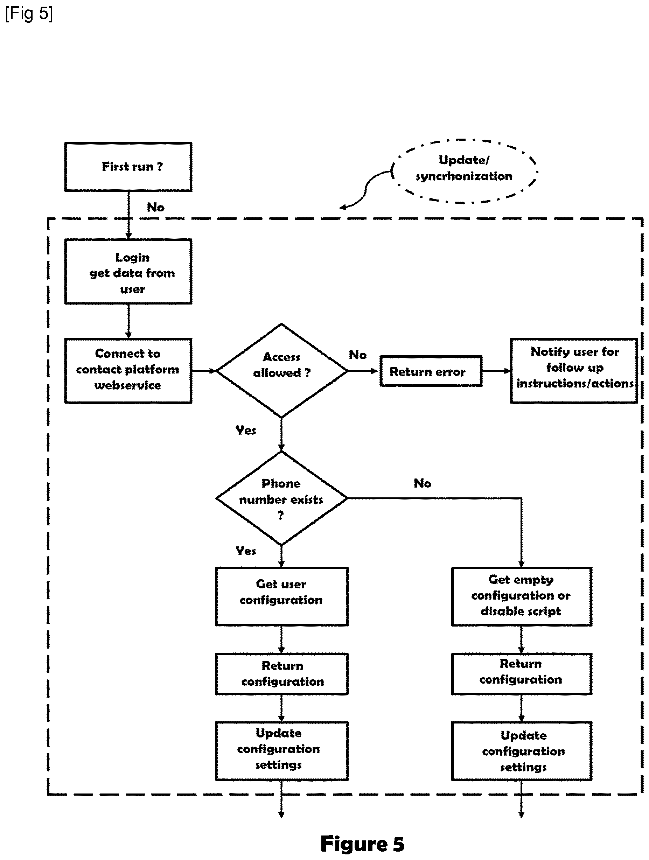

In another embodiment, the onboarding procedure (figure 5) implemented by the set-up program of said self-service mobile application comprises at least:
- login. This may be done by using, for example and without limitation, a phone number and/or an e-mail address.
- check if the phone number and the e-mail entered during the login are registered in the database of the contact platform; and
   - Notifying the user if the phone number and e-mail are not registered and set at least a set of instructions/actions to do;
   - if the phone number and e-mail are registered, check if the application is authenticated; and
      - if the application is not authenticated
         - check if the end-user has an activation code and if not;
            ∘ send an activation code via sms or e-mail to the end-user
            ∘ activate application after receiving the activation code;
            ∘ storing an UID on the mobile device (4) of the end-user
            ∘ check again if the application is authenticated
   - if the application is authenticated, check if it is the end-user first login; and
      - if it is the first login;
         - check for updates
         - update/synchronize data
         - store data in application
         - start application page
   - if it is not the first login
      - launch feedback data
      - store data in application
      - start application main page

In some embodiments, the update/synchronization procedure (figure 6) implemented by the set-up program of said self-service mobile application comprises at least:
- Login
- connect to the contact platform (21) web service and;
   - Launching a notification to the end-user for following up a set of instructions/actions in the case access to the contact platform (21) is not allowed;
   - checking if the phone number of the end-user exists in the database of the contact platform (21) in the case the access is allowed and;
      ∘ if the phone number does not exist:
         - getting empty configuration or disable script
         - returning the configuration;
         - updating configuration settings
      ∘ if the phone number exists:
         - getting user configuration;
         - returning configuration;
         - updating configuration settings

In some embodiments, the system comprises a firmware or hardware with software for launching a notification to an end-user, using the self-application to request services, for following up a set of instructions/actions in case access to the contact platform is not allowed.

In some embodiments, the system comprises a firmware or hardware with software for checking if the phone number of an end-user exists in the database of the contact platform in the case the access to said contact platform is allowed and;
∘ if the phone number does not exist:
   - getting empty configuration or disable script
   - returning the configuration;
   - updating configuration settings
∘ if the phone number exists:
   - getting user configuration;
   - returning configuration;
   - updating configuration settings

In some embodiments, the system comprises a firmware or hardware with software for checking if the phone number and the e-mail entered during the login are registered in the database of the contact platform and;
- Notifying the user if the phone number and e-mail are not registered and set at least a set of instructions/actions to do;
- if the phone number and e-mail are registered, check if the application is authenticated; and
   - if the application is not authenticated
      • check if the end-user has an activation code and if not;
         ∘ send an activation code via sms or e-mail to the end-user
         ∘ activate application after receiving the activation code;
         ∘ storing an UID on the mobile device (4) of the end-user
         ∘ check again if the application is authenticated
- if the application is authenticated, check if it is the end-user first login; and
   - if it is the first login;
      - check for updates
      - update/synchronize data
      - store data in application
      - start application page
- if it is not the first login
   - launch feedback data
   - store data in application
   - start application page

The benefits for users/customers when using the self-mobile application as described in the present application are reduced time required to become productive when searching for information or requesting actions regarding IT services, including the time for IT to deliver these services.

Employees can easily access IT services anytime, anywhere and from any device, designed to seamlessly fit in with today's contemporary styles of mobile working.

By simplifying, personalizing, automating and speeding up the experience of accessing and using IT services, it tends to help end-users become less dependent on personal and direct interactions with IT staff and become more comfortable with and willing to use self-service IT support.

The present application describes various technical features and advantages with reference to the figures and/or various embodiments. Those skilled in the art will understand that the technical features of a given embodiment can in fact be combined with features of another embodiment unless explicitly stated otherwise, or unless the combination does not provide a solution to at least one of the technical problems mentioned in the present application. In addition, the technical features described in a given embodiment can be isolated from the other technical features of this embodiment unless explicitly stated otherwise.

It must be obvious to those skilled in the art that the present invention allows embodiments in many specific forms without departing from the field of application of the invention as claimed. Consequently, the present embodiments must be considered as illustrations, but can be modified in the area defined by the scope of the appended claims, and the invention must not be limited to the details given above.

### LIST OF REFERENCE SIGNS

(1)
(2)
(3)

## Claims

1. A system (1) for providing IT services support to end-users/customers comprising at least:
a service platform (2) comprising a central database and including at least a contact platform (21), at least a service management platform (20), each platform comprising at least a server, at least a database for storing data or information and a set of programs executed on the servers for at least providing services;
a communication network (22) for at least connecting components of the service platform;
a self-service mobile application for accessing IT services support provided by IT services providers through the service platform (2) and running on a mobile device (4) comprising at least a memory for storing said application and a set of programs, a screen for displaying or receiving information/instructions, a processor for executing said application so as to implement a set of functionalities allowing end-users, owners of said mobile device (4), through a set of icons and fields of an interactive interface generated by the execution of the application for getting support from agents on the contact platform (21) through a multi-channel of communication; the system (1) being configured such that that:
- the set of functionalities of the application comprises a functionality allowing an automated two-factor authentication for resetting a password via an active directory and, connecting to the contact platform (21) for allowing end-users to access the IT services support and to a services management platform for downloading instructions or information for at least monitoring the end-users' requests addressed to the IT services providers of the services platform,
- the service management platform (20) comprises an application management cluster (200) including at least two servers (or nodes) for the self-service mobile application management comprising at least an interface for managing end-user provisioning, authentication and, at least a storage for storing service definitions which are used and selected by the user from the self-service mobile application communication towards the respective contact platform (21) service components,
- the communication network (22) comprises at least an internal load-balancer (220) device (23) comprising at least a set of memorized addresses for distributing load between the servers of the service management platform (20) and the servers of the contact platform,
- a transmission platform (3) comprises at least a server for enabling communication between the self-service mobile application and the service management platform (20) or the contact platform (21), and at least a transmission load-balancer (300), comprising at least a set of memorized addresses, for transmitting communication from the self-service mobile application, through the internal load-balancer (220) of the communication network, to the service management platform (20) or the contact platform (21),
- when a communication is taking place from the self-service mobile application towards the service management platform (20) or the contact platform (21), the transmission load-balancer (300) is configured to select, by means of a program executed on its processor, the corresponding memorized address of its at least one set of memorized addresses and transmits the information to the internal load-balancer (220) of communication network, which in return selects, by means of a program executed on a its processor, a corresponding address of its at least one set of memorized addresses to transmit the information to the component of the management platform or the contact platform (21) concerned by the information transmitted,
- the transmission load-balancer (300) and the internal load-balancer (220) being configured to use different memorized addresses depending if communication is established between the self-service mobile application and the service management platform (20) or between the self-service mobile application and the contact platform.

2. A system (1) for providing IT services support to end-users according to claim 1, **characterized in that** it comprises a firmware or a hardware with software which implements a set of functionalities of the self-service mobile application which comprises at least:
proactive newsfeed;
starting a phone call or a live chat with a support agent of the service platform;
requesting a call-back by a support agent;
accessing a virtual agent;
check the status of a support ticket;
order IT services and products from a service catalogue.

3. A system (1) for providing IT services support according to claim 1, **characterized in that** the central database of the service platform (2) comprises at least a set of layers each layer comprising at least a storage for registering at least specific data and information related at least to the user or customer, the set of layers comprising at least:
a contact layer for registering information such as contact ID (contact identity), phone Number (phone number), customer ID (customer identity), and contact properties;
a customers layer for registering information such as customer properties, display properties, connection properties;
a domain layer for registering information such as a domain ID, the customer ID and connection properties;
a user layer for registering information such as User ID, contact ID, customer ID, domain ID, user properties.

4. A system (1) for providing IT services support to end-users according to claim 1, **characterized in that** the service platform (2) comprises an orchestration cluster (210) for managing the incoming request, transmitted by an end-user through the self-service mobile application, and transmitting said request to the contact platform (21).

5. A system (1) for providing IT services support to end-users according to claim 1, **characterized in that** it comprises a SMTP server connected to the service management platform (20) for sending to customers at least initial onboarding password for allowing communication between the self-service mobile application and the service management platform (20) or the contact platform.

6. A system (1) for providing IT services support to end-users according to claim 1 **characterized in that** the contact platform (21) comprises at least a webservice call module comprising a set of programs for at least checking end-user/customer phone-number, checking updates, getting data updates when an end-user/customer requests a support from the service platform.

7. A system (1) for providing IT services support to end-users according to claim 1, **characterized in that** the contact platform (21) comprises a set of memorized service modules or program, the execution of which on at least a processor of one of the servers of said contact platform, implement at least one of the services selected by the user according the memorised service definitions and comprising at least a click-to-call service, a call-back service, a chat service and an e-mail service, when the request of one of said services is sent by the self-service mobile application of a user to the contact platform.

8. A system (1) for providing IT services support to end-users according to claim 1, **characterized in that** it comprises a firmware or hardware with software for launching a notification to an end-user who is using the self-service mobile application to request services, for following up a set of instructions/actions in case access to the contact platform is not allowed.

9. A system (1) for providing IT services support to end-users according to claim 1, **characterized in that** it comprises a firmware or hardware with software for checking if the phone number of an end-user exists in the database of the contact platform in the case the access to said contact platform is allowed and;
o if the phone number does not exist:
• getting empty configuration
• returning the configuration;
• updating configuration settings
o if the phone number exists:
• getting user configuration;
• returning configuration;
• updating configuration settings.

10. A system (1) for providing IT services support to end-users according to claim 1, **characterized in that** it comprises a firmware or hardware with software for checking if the phone number and the e-mail entered during the login are registered in the database of the contact platform and;
- Notifying the user if the phone number and e-mail are not registered and set at least a set of instructions/actions to do;
- if the phone number and e-mail are registered, check if the application is authenticated; and
• if the application is not authenticated
• check if the end-user has an activation code and if not;
∘ send an activation code via sms or e-mail to the end-user
∘ activate application after receiving the activation code;
∘ storing an UID on the mobile device (4) of the end-user
∘ check again if the application is authenticated
- if the application is authenticated, check if it is the end-user first login; and
• if it is the first login;
- check for updates
- update/synchronize data
- store data in application
- start application page
- if it is not the first login
• launch feedback data
• store data in application
• start application page.

## Patentansprüche

1. System (1) zum Bereitstellen von Support für IT-Dienste für Endbenutzer/Kunden, umfassend mindestens:
eine Dienstplattform (2), umfassend eine zentrale Datenbank und einschließend mindestens eine Kontaktplattform (21), mindestens eine Dienstverwaltungsplattform (20), jede Plattform umfassend mindestens einen Server, mindestens eine Datenbank zum Speichern von Daten oder Informationen und einen Satz von Programmen, die auf den Servern mindestens zum Bereitstellen von Diensten ausgeführt werden;
ein Kommunikationsnetzwerk (22) mindestens zum Verbinden von Komponenten der Dienstplattform;
eine mobile Selbstbedienungsanwendung für ein Zugreifen auf den Support für IT-Dienste, die durch Anbieter von IT-Diensten über die Dienstplattform (2) bereitgestellt werden und auf einer mobilen Vorrichtung (4) ablaufen, umfassend mindestens einen Speicher zum Speichern der Anwendung und eines Satzes von Programmen, einen Bildschirm zum Anzeigen oder Empfangen von Informationen/Anweisungen, einen Prozessor zum Ausführen der Anwendung, um einen Satz von Funktionalitäten zu implementieren, die es Endbenutzern, Eigentümern der mobilen Vorrichtung (4), erlauben, über einen Satz von Symbolen und Feldern einer interaktiven Schnittstelle, die durch die Ausführung der Anwendung erzeugt wird, Support von Agenten auf der Kontaktplattform (21) über eine Multikanal-Kommunikation zu erhalten;
wobei das System (1) derart konfiguriert ist, dass:
- der Satz von Funktionalitäten der Anwendung eine Funktionalität umfasst, die eine automatisierte Zwei-Faktor-Authentifizierung zum Zurücksetzen eines Passworts über ein Active Directory und ein Verbinden mit der Kontaktplattform (21) erlaubt, um einem Endbenutzer einen Zugriff auf den Support für IT-Dienste und auf eine Diensteverwaltungsplattform zum Herunterladen von Anweisungen oder Informationen mindestens zum Überwachen der Anfragen der Endbenutzer, die an die Anbieter der IT-Dienste der Diensteplattform gerichtet sind, zu erlauben,
- die Dienstverwaltungsplattform (20) einen Anwendungsverwaltungscluster (200) umfasst, einschließend mindestens zwei Server (oder Knoten) für die Verwaltung der mobilen Selbstbedienungsanwendung, umfassend mindestens eine Schnittstelle zum Verwalten einer Endbenutzerbereitstellung, für eine Authentifizierung und mindestens eine Speicherungseinrichtung zum Speichern von Dienstdefinitionen, die durch den Benutzer aus der Kommunikation der mobilen Selbstbedienungsanwendung zu den jeweiligen Dienstkomponenten der Kontaktplattform (21) verwendet und ausgewählt werden,
- das Kommunikationsnetzwerk (22) mindestens eine Vorrichtung (23) eines Ausgleichers (220) einer internen Last, umfassend mindestens einen Satz von gespeicherten Adressen zum Verteilen einer Last zwischen den Servern der Dienstverwaltungsplattform (20) und den Servern der Kontaktplattform, umfasst,
- eine Übertragungsplattform (3) mindestens einen Server zum Erlauben der Kommunikation zwischen der mobilen Selbstbedienungsanwendung und der Dienstverwaltungsplattform (20) oder der Kontaktplattform (21) und mindestens einen Übertragungslastausgleicher (300), umfassend mindestens einen Satz von gespeicherten Adressen, zum Übertragen der Kommunikation von der mobilen Selbstbedienungsanwendung über den Ausgleicher (220) der internen Last des Kommunikationsnetzwerks an die Dienstverwaltungsplattform (20) oder die Kontaktplattform (21) umfasst,
- wenn eine Kommunikation von der mobilen Selbstbedienungsanwendung zu der Dienstverwaltungsplattform (20) oder der Kontaktplattform (21) stattfindet, der Übertragungslastausgleicher (300) konfiguriert ist, um mittels eines auf seinem Prozessor ausgeführten Programms die entsprechende gespeicherte Adresse seines mindestens einen Satzes von gespeicherten Adressen auszuwählen, und die Informationen an den Ausgleicher (220) der internen Last des Kommunikationsnetzwerks überträgt, der im Gegenzug mittels eines auf seinem Prozessor ausgeführten Programms eine entsprechende Adresse seines mindestens einen Satzes von gespeicherten Adressen auswählt, um die Informationen an die durch die übertragenen Informationen betroffene Komponente der Verwaltungsplattform oder der Kontaktplattform (21) zu übertragen,
- wobei der Übertragungslastausgleicher (300) und der Ausgleicher (220) der internen Last konfiguriert sind, um unterschiedliche gespeicherte Adressen zu verwenden, je nachdem, ob die Kommunikation zwischen der mobilen Selbstbedienungsanwendung und der Dienstverwaltungsplattform (20) oder zwischen der mobilen Selbstbedienungsanwendung und der Kontaktplattform hergestellt wird.

2. System (1) zum Bereitstellen von Support für IT-Dienste für Endbenutzer nach Anspruch 1, **dadurch gekennzeichnet, dass** es eine Firmware oder eine Hardware mit Software umfasst, die einen Satz von Funktionalitäten der mobilen Selbstbedienungsanwendung implementiert, die mindestens umfasst:
einen proaktiven Newsfeed;
Einleiten eines Telefongesprächs oder eines Live-Chats mit einem Supportmitarbeiter der Dienstplattform; Anfragen eines Rückrufs durch einen Supportmitarbeiter;
Zugreifen auf einen virtuellen Agenten;
Überprüfen des Status eines Supporttickets;
Bestellen von IT-Diensten und -Produkten aus einem Dienstkatalog.

3. System (1) zum Bereitstellen von Support für IT-Dienste nach Anspruch 1, **dadurch gekennzeichnet, dass** die zentrale Datenbank der Dienstplattform (2) mindestens einen Satz von Schichten umfasst, jede Schicht umfassend mindestens eine Speicherungseinrichtung zum Registrieren von mindestens spezifischen Daten und Informationen, die sich mindestens auf den Benutzer oder Kunden beziehen, der Satz von Schichten mindestens umfassend:
eine Kontaktschicht zum Registrieren von Informationen wie Kontakt-ID (Kontaktidentität), Telefonnummer (Telefonnummer), Kunden-ID (Kundenidentität) und Kontakteigenschaften;
eine Kundenschicht zum Registrieren von Informationen wie Kundeneigenschaften, Anzeigeeigenschaften, Verbindungseigenschaften;
eine Domänenschicht zum Registrieren von Informationen wie einer Domänen-ID, der Kunden-ID und Verbindungseigenschaften;
eine Benutzerschicht zum Registrieren von Informationen wie Benutzer-ID, Kontakt-ID, Kunden-ID, Domänen-ID, Benutzereigenschaften.

4. System (1) zum Bereitstellen von Support für IT-Dienste für Endbenutzer nach Anspruch 1, **dadurch gekennzeichnet, dass** die Dienstplattform (2) einen Orchestrierungscluster (210) zum Verwalten der eingehenden Anfrage, die durch einen Endbenutzer über die mobile Selbstbedienungsanwendung übertragen wird, und Übertragen der Anfrage an die Kontaktplattform (21) umfasst.

5. System (1) zum Bereitstellen von Support für IT-Dienste für Endbenutzer nach Anspruch 1, **dadurch gekennzeichnet, dass** es einen SMTP-Server, der mit der Dienstverwaltungsplattform (20) verbunden ist, zum Senden mindestens eines anfänglichen Onboarding-Passworts an Kunden zum Erlauben der Kommunikation zwischen der mobilen Selbstbedienungsanwendung und der Dienstverwaltungsplattform (20) oder der Kontaktplattform umfasst.

6. System (1) zum Bereitstellen von Support für IT-Dienste für Endbenutzer nach Anspruch 1, **dadurch gekennzeichnet, dass** die Kontaktplattform (21) mindestens ein Webdienstanrufmodul umfasst, umfassend einen Satz von Programmen, mindestens zum Überprüfen einer Endbenutzer-/Kundentelefonnummer, Überprüfen von Updates, Abrufen von Datenaktualisierungen, wenn ein Endbenutzer/Kunde einen Support von der Dienstplattform anfragt.

7. System (1) zum Bereitstellen von Support für IT-Dienste für Endbenutzer nach Anspruch 1, **dadurch gekennzeichnet, dass** die Kontaktplattform (21) einen Satz von gespeicherten Dienstmodulen oder ein Programm umfasst, deren Ausführung auf mindestens einem Prozessor eines der Server der Kontaktplattform mindestens einen der Dienste, der durch den Benutzer gemäß den gespeicherten Dienstdefinitionen ausgewählt wird, implementiert, und umfassend mindestens einen Click-to-Call-Dienst, einen Rückrufdienst, einen Chatdienst und einen E-Mail-Dienst, wenn die Anfrage eines der Dienste durch die mobile Selbstbedienungsanwendung eines Benutzers an die Kontaktplattform gesendet wird.

8. System (1) zum Bereitstellen von Support für IT-Dienste für Endbenutzer nach Anspruch 1, **dadurch gekennzeichnet, dass** es eine Firmware oder Hardware mit Software zum Auslösen einer Benachrichtigung an einen Endbenutzer, der die mobile Selbstbedienungsanwendung verwendet, um Dienste anzufordern, zum Befolgen eines Satzes von Anweisungen/Aktionen im Falle, dass der Zugriff auf die Kontaktplattform nicht erlaubt ist, umfasst.

9. System (1) zum Bereitstellen von Support für IT-Dienste für Endbenutzer nach Anspruch 1, **dadurch gekennzeichnet, dass** es eine Firmware oder Hardware mit Software zum Überprüfen umfasst, ob die Telefonnummer eines Endbenutzers in der Datenbank der Kontaktplattform existiert, im Falle, dass der Zugriff auf die Kontaktplattform erlaubt ist, und;
∘ falls die Telefonnummer nicht existiert:
• Erhalten einer leeren Konfiguration
• Zurückgeben der Konfiguration;
• Aktualisieren von Konfigurationseinstellungen
∘ falls die Telefonnummer existiert:
• Erhalten einer Benutzerkonfiguration;
• Zurückgeben der Konfiguration;
• Aktualisieren von Konfigurationseinstellungen.

10. System (1) zum Bereitstellen von Support für IT-Dienste für Endbenutzer nach Anspruch 1, **dadurch gekennzeichnet, dass** es eine Firmware oder Hardware mit Software zum Überprüfen, ob die Telefonnummer und E-Mail, die während der Anmeldung eingegeben werden, in der Datenbank der Kontaktplattform registriert sind, umfasst und;
- Benachrichtigen des Benutzers, falls die Telefonnummer und die E-Mail nicht registriert sind, und Festlegen mindestens eines Satzes von vorzunehmenden Anweisungen/Aktionen;
- falls die Telefonnummer und die E-Mail-Adresse registriert sind, Überprüfen, ob die Anwendung authentifiziert ist; und
• falls die Anwendung nicht authentifiziert ist
• Überprüfen, ob der Endbenutzer über einen Aktivierungscode verfügt, und falls nicht;
∘ Senden eines Aktivierungscodes per SMS oder E-Mail an den Endbenutzer
∘ Aktivieren der Anwendung nach dem Empfangen des Aktivierungscodes;
∘ Speichern einer UID auf der mobilen Vorrichtung (4) des Endbenutzers
∘ erneuten Überprüfen, ob die Anwendung authentifiziert ist
- falls die Anwendung authentifiziert ist, Überprüfen, ob es sich um die Erstanmeldung des Endbenutzers handelt; und
• falls es sich um die Erstanmeldung handelt;
∘ Überprüfen auf Aktualisierungen
∘ Aktualisieren/Synchronisieren von Daten
∘ Speichern von Daten in der Anwendung
∘ Starten einer Anwendungsseite
- falls es sich nicht um die Erstanmeldung handelt
• Auslösen von Rückmeldungsdaten
• Speichern von Daten in der Anwendung
• Starten der Anwendungsseite.

## Revendications

1. Système (1) de fourniture de prise en charge de services informatiques aux utilisateurs/clients finaux, comprenant au moins :
une plateforme de service (2) comprenant une base de données centrale et comportant au moins une plateforme de contact (21), au moins une plateforme de gestion de services (20), chaque plateforme comprenant au moins un serveur, au moins une base de données permettant de stocker des données ou des informations et un ensemble de programmes exécutés sur les serveurs permettant au moins de fournir des services ;
un réseau de communication (22) permettant au moins de connecter des composants de la plateforme de service ;
une application mobile en libre-service permettant d'accéder à une prise en charge de services informatiques fournie par des fournisseurs de services informatiques par l'intermédiaire de la plateforme de services (2) et s'exécutant sur un dispositif mobile (4) comprenant au moins une mémoire pour stocker ladite application et un ensemble de programmes, un écran pour afficher ou recevoir des informations/instructions, un processeur pour exécuter ladite application afin de mettre en œuvre un ensemble de fonctionnalités permettant aux utilisateurs finaux, propriétaires dudit dispositif mobile (4), par l'intermédiaire d'un ensemble d'icônes et de champs d'une interface interactive générée par l'exécution de l'application, d'obtenir une prise en charge de la part d'agents sur la plateforme de contact (21) par l'intermédiaire d'un multicanal de communication ;
le système (1) étant configuré de telle sorte que :
- l'ensemble des fonctionnalités de l'application comprend une fonctionnalité permettant une authentification automatique à deux facteurs pour réinitialiser un mot de passe par le biais d'un service d'annuaire et, se connectant à la plateforme de contact (21) pour permettre aux utilisateurs finaux d'accéder à la prise en charge de services informatiques et à une plateforme de gestion de services pour télécharger des instructions ou des informations pour au moins surveiller les demandes des utilisateurs finaux adressées aux fournisseurs de services informatiques de la plateforme de services,
- la plateforme de gestion de services (20) comprend une grappe de gestion d'applications (200) comportant au moins deux serveurs (ou nœuds) pour la gestion d'applications mobiles en libre-service comprenant au moins une interface pour gérer le provisionnement, l'authentification de l'utilisateur final et, au moins, un stockage pour stocker des définitions de services qui sont utilisées et sélectionnées par l'utilisateur à partir de la communication d'application mobile en libre-service vers les composants de service respectifs de la plateforme de contact (21),
- le réseau de communication (22) comprend au moins un dispositif (23) d'équilibrage de charge interne (220) comprenant au moins un ensemble d'adresses mémorisées permettant de répartir une charge entre les serveurs de la plateforme de gestion de services (20) et les serveurs de la plateforme de contact,
- une plateforme de transmission (3) comprend au moins un serveur permettant une communication entre l'application mobile en libre-service et la plate-forme de gestion de services (20) ou la plateforme de contact (21), et au moins un équilibreur de charge de transmission (300), comprenant au moins un ensemble d'adresses mémorisées, pour transmettre une communication à partir de l'application mobile en libre-service, par l'intermédiaire de l'équilibreur de charge interne (220) du réseau de communication, à la plateforme de gestion de services (20) ou à la plateforme de contact (21),
- lorsqu'une communication a lieu à partir de l'application mobile en libre-service vers la plateforme de gestion de services (20) ou la plateforme de contact (21), l'équilibreur de charge de transmission (300) est configuré pour sélectionner, au moyen d'un programme exécuté sur son processeur, l'adresse mémorisée correspondante de son au moins un ensemble d'adresses mémorisées et transmet les informations à l'équilibreur de charge interne (220) du réseau de communication, qui sélectionne en retour, au moyen d'un programme exécuté sur un de ses processeurs, une adresse correspondante de son au moins un ensemble d'adresses mémorisées pour transmettre les informations au composant de la plateforme de gestion ou de la plateforme de contact (21) concerné par les informations transmises,
- l'équilibreur de charge de transmission (300) et l'équilibreur de charge interne (220) étant configurés pour utiliser différentes adresses mémorisées selon qu'une communication est établie entre l'application mobile en libre-service et la plateforme de gestion de services (20) ou entre l'application mobile en libre-service et la plateforme de contact.

2. Système (1) de fourniture de prise en charge de services informatiques aux utilisateurs finaux selon la revendication 1, **caractérisé en ce qu'il** comprend un micrologiciel ou un matériel avec un logiciel qui met en œuvre un ensemble de fonctionnalités de l'application mobile en libre-service qui comprend au moins :
un fil d'actualités proactif ;
le démarrage d'un appel téléphonique ou d'un dialogue en ligne en direct avec un agent de prise en charge de la plateforme de service ; la demande d'un rappel par un agent de prise en charge ;
l'accès à un agent virtuel ;
vérifier l'état d'un ticket de prise en charge ;
commander des services et produits informatiques à partir d'un catalogue de services.

3. Système (1) de fourniture de prise en charge de services informatiques selon la revendication 1, **caractérisé en ce que** la base de données centrale de la plateforme de services (2) comprend au moins un ensemble de couches, chaque couche comprenant au moins un stockage permettant d'enregistrer au moins des données spécifiques et des informations se rapportant au moins à l'utilisateur ou au client, l'ensemble de couches comprenant au moins :
une couche de contact pour enregistrer des informations telles qu'une ID de contact (identité de contact), un numéro de téléphone (numéro de téléphone), une ID de client (identité de client) et des propriétés de contact ;
une couche clients pour enregistrer des informations telles que des propriétés client, des propriétés d'affichage, des propriétés de connexion ;
une couche domaine pour enregistrer des informations telles qu'une ID de domaine, l'ID de client et des propriétés de connexion ;
une couche utilisateur pour enregistrer des informations telles que l'ID d'utilisateur, l'ID de contact, l'ID de client, l'ID de domaine, des propriétés d'utilisateur.

4. Système (1) de fourniture de prise en charge de services informatiques aux utilisateurs finaux selon la revendication 1, **caractérisé en ce que** la plateforme de services (2) comprend une grappe d'orchestration (210) permettant de gérer la demande entrante, transmise par un utilisateur final par l'intermédiaire de l'application mobile en libre-service, et de transmettre ladite demande à la plateforme de contact (21).

5. Système (1) de fourniture de prise en charge de services informatiques aux utilisateurs finaux selon la revendication 1, **caractérisé en ce qu'il** comprend un serveur SMTP connecté à la plateforme de gestion de services (20) permettant d'envoyer aux clients au moins un mot de passe d'intégration initial permettant une communication entre l'application mobile en libre-service et la plateforme de gestion de services (20) ou la plateforme de contacts.

6. Système (1) de fourniture de prise en charge de services informatiques aux utilisateurs finaux selon la revendication 1, **caractérisé en ce que** la plateforme de contact (21) comprend au moins un module d'appel de service Web comprenant un ensemble de programmes permettant au moins de vérifier le numéro de téléphone de l'utilisateur/client final, de vérifier des mises à jour, d'obtenir des mises à jour de données lorsqu'un utilisateur/client final demande une prise en charge de la part de la plateforme de service.

7. Système (1) de fourniture de prise en charge de services informatiques aux utilisateurs finaux selon la revendication 1, **caractérisé en ce que** la plateforme de contact (21) comprend un ensemble de modules ou programmes de service mémorisés, dont l'exécution sur au moins un processeur de l'un des serveurs de ladite plateforme de contact, met en œuvre au moins l'un parmi les services sélectionnés par l'utilisateur selon les définitions de service mémorisées et comprenant au moins un appel en un clic, un service de rappel, un service de dialogue en ligne et un service de courriel, lorsque la demande de l'un desdits services est envoyée par l'application mobile en libre-service d'un utilisateur à la plateforme de contact.

8. Système (1) de fourniture de prise en charge de services informatiques aux utilisateurs finaux selon la revendication 1, **caractérisé en ce qu'il** comprend un micrologiciel ou un matériel avec un logiciel permettant de lancer une notification à un utilisateur final qui utilise l'application mobile en libre-service pour demander des services, de suivre un ensemble d'instructions/actions dans le cas où un accès à la plateforme de contact n'est pas autorisé.

9. Système (1) de fourniture de prise en charge de services informatiques aux utilisateurs finaux selon la revendication 1, **caractérisé en ce qu'il** comprend un micrologiciel ou un matériel avec un logiciel permettant de vérifier si le numéro de téléphone d'un utilisateur final existe dans la base de données de la plateforme de contact dans le cas où l'accès à ladite plateforme de contact est autorisé et ;
∘ si le numéro de téléphone n'existe pas :
• l'obtention d'une configuration vide
• le retour de la configuration ;
• la mise à jour de paramètres de configuration
∘ si le numéro de téléphone existe :
• l'obtention de la configuration de l'utilisateur ;
• le retour de la configuration ;
• la mise à jour des paramètres de configuration.

10. Système (1) de fourniture de prise en charge de services informatiques aux utilisateurs finaux selon la revendication 1, **caractérisé en ce qu'il** comprend un micrologiciel ou un matériel avec un logiciel permettant de vérifier si le numéro de téléphone et le courriel saisis lors de la connexion sont enregistrés dans la base de données de la plateforme de contact et ;
- notifier l'utilisateur si le numéro de téléphone et le courriel ne sont pas enregistrés et définir au moins un ensemble d'instructions/actions à faire ;
- si le numéro de téléphone et le courriel sont enregistrés, vérifier si l'application est authentifiée ; et
• si l'application n'est pas authentifiée
• vérifier si l'utilisateur final a un code d'activation et si ce n'est pas le cas ;
∘ envoyer un code d'activation par SMS ou par courriel à l'utilisateur final
∘ activer l'application après réception du code d'activation ;
∘ stocker un UID sur le dispositif mobile (4) de l'utilisateur final
∘ vérifier à nouveau si l'application est authentifiée
- si l'application est authentifiée, vérifier s'il s'agit de la première connexion de l'utilisateur final ; et
• s'il s'agit de la première connexion ;
∘ vérifier les mises à jour
∘ mettre à jour/synchroniser des données
∘ stocker des données dans l'application
∘ démarrer la page de l'application
- s'il ne s'agit pas de la première connexion
• lancer les données de rétroaction
• stocker les données dans l'application
• démarrer la page de l'application.
